# EUROPEAN PATENT APPLICATION

(11) **EP 3 037 653 A1**
(43) Date of publication of application: **29.06.2016**
(21) Application number: 14199994.6
(22) Date of filing: 23.12.2014
(51) Int. Cl.: F03B 13/26, F16C 39/06

(54) **A hydroelectric turbine bearing load reduction system**

(71) Applicant: Openhydro IP Limited, Dublin 2 (IE)
(72) Inventor: Spooner, Edward, Bishop Auckland, Durham DL13 1SL (GB)
(74) Representative: O'Neill, Brian

(57) **Abstract**

The present invention provides a hydroelectric turbine (10) having a shaftless rotor (12) mounted for rotation relative to a stator (14), the turbine including a generator adapted to generate electricity in response to rotation of the rotor (12) relative to the stator (14), and further including a passive magnetic radial load reduction system (16) comprising an arrangement of permanent magnets (18, 20, 22) adapted to generate a repulsive force between the rotor (12) and the stator (14) about a first portion (24) of the stator such as to reducing the torque necessary to start the rotor (12).

## Description

### Field of the invention

The present invention is concerned with a bearing load reduction system for a hydroelectric turbine, which utilises arrays of permanent magnets in order to reduce the radial loading applied to a bearing system of the turbine, such as to both reduce the start-up torque necessary to initiate rotation of the turbine, and to reduce bearing wear during operation.

### Background of the invention

The present invention relates generally to the field of turbines that produce electricity by harnessing the flow of water, and more particularly relates to such devices in which a tidal flow of water causes rotation of a large rotor having an annular outer rim disposed within a large annular housing defining the stator.

While most turbines are constructed to have a central rotating shaft onto which the blades or runners are mounted, it is also known to produce shaftless turbines, also known as rim-mounted or supported turbines. Turbines having a rim mounted rotor, where the blades are mounted to at least one outer annular ring or rim, and optionally an open inner ring, can be particularly successful in low head conditions, i.e., in slower currents. However to initially start the open centre turbine from a stationary state, for example at the beginning of each tidal cycle, it is necessary to relieve the bearings of radial loading so that the static friction does not overcome the small torque generated by the turbine when the tidal flow is low at the beginning of a tidal cycle.

In addition to the above issue, a large number of suitable tidal sites have what are known as "off axis" effects, meaning that the ebb and flow of the tide are not in direct opposition to one another. As a result the axis of rotation of the turbine may be aligned with the tide in one direction, but misaligned when the tide flows in the opposite direction.

Radial load in a shaftless or rim mounted turbine occurs as a result of:
- The weight of the rotor causing a radial force directed downward
- Off-axis flow causing a radial force acting horizontally
- Magnetic attraction of the rotor magnets to the stator iron causing a net radial force in the direction of any eccentricity of the rotor position

Providing the correct amount of buoyancy to the rotor can offset the first of these but has no effect on the remaining two issues. The magnetic attraction of the rotor to the stator increases with the eccentricity and so is unstable and limited only by the mechanical bearings. As the mechanical bearings wear this force becomes larger and so the turbine may fail to start after a period in service.

In addition, the generator magnets attract the stator iron. The total force on the rotor due to this effect is zero if the rotor is perfectly concentric with the stator. If the rotor position is eccentric, the generator magnets that are closer to the stator exert a greater attractive force and the total is in the direction tending to increase the eccentricity; the rotor eccentricity is therefore unstable. Figure 6 shows the variation of radial force for a hypothetical example machine design as the rotor position is varied.

It is therefore an object of the present invention to overcome the above mentioned problems of the prior art.

### Summary of the invention

According to the present invention there is provided a hydroelectric turbine comprising a rotor mounted for rotation relative to a stator; a generator adapted to generate electricity in response to rotation of the rotor relative to the stator; and a passive magnetic radial load reduction system comprising an arrangement of permanent magnets adapted to generate a repulsive force between the rotor and the stator about a first portion of the stator.

Preferably, the passive magnetic radial load reduction system comprises a plurality of axially spaced and radially parallel arrays of magnets.

Preferably, the polarity of adjacent arrays of magnets is reversed.

Preferably, the arrangement of permanent magnets is adapted to generate an attractive force between the rotor and stator about a second portion of the stator.

Preferably, the first portion and the second portion of the stator are diametrically opposed.

Preferably, the arrangement of permanent magnets comprises a circumferentially extending array of magnets of a first pole on the rotor, an arc of magnets of a first pole on the first portion of the stator, and an arc of magnets of a second pole on the second portion of the stator, each radially opposed the rotor magnets.

Preferably, the rotor magnets are provided as a substantially continuous ring of magnets.

Preferably, the arc of magnets on the first portion of the stator are separated from the arc of magnets on the second portion of the stator, at each end of the arc, by a gap.

Preferably, the first portion of the stator corresponds with at least the bottom of the circular path described by the rotor, and the second portion corresponds with at least the top of the circular path, when the turbine is in an operational orientation.

Preferably, the first portion of the stator describes an arc of between 60° and 300°.

Preferably, the second portion of the stator describes an arc of between 180° and 60°.

Preferably, the stator magnets are arranged to be symmetrically distributed about a vertical axis when the turbine is in an operational orientation.

Preferably, the rotor is provided with buoyancy to offset the weight of the rotor.

Preferably, the generator comprises an array of generator magnets independent of the load reduction system magnets.

Preferably, the generator magnets are axially spaced and radially parallel of the load reduction system magnets.

Preferably, the radial position of at least a portion of the permanent magnets is adjustable.

Preferably, the radial position of at least a portion of the permanent magnets on the stator is adjustable.

Preferably, the radial position of the permanent magnets is automatically adjustable.

As used herein, the terms "axially" and "radially" are relative terms that are intended to indicate an orientation of an element in question relative to a operational orientation of a hydroelectric turbine, and in particular the term "axially" is intended to mean in a direction parallel to an axis of rotation of a rotor of the turbine, while the term "radially" is intended to mean in a direction radially outward or inward of said axis of rotation, which axis will generally lie in a substantially horizontal plane during operation of the turbine.

### Brief description of the drawings

The present invention will now be described with reference to the accompanying drawings, in which:

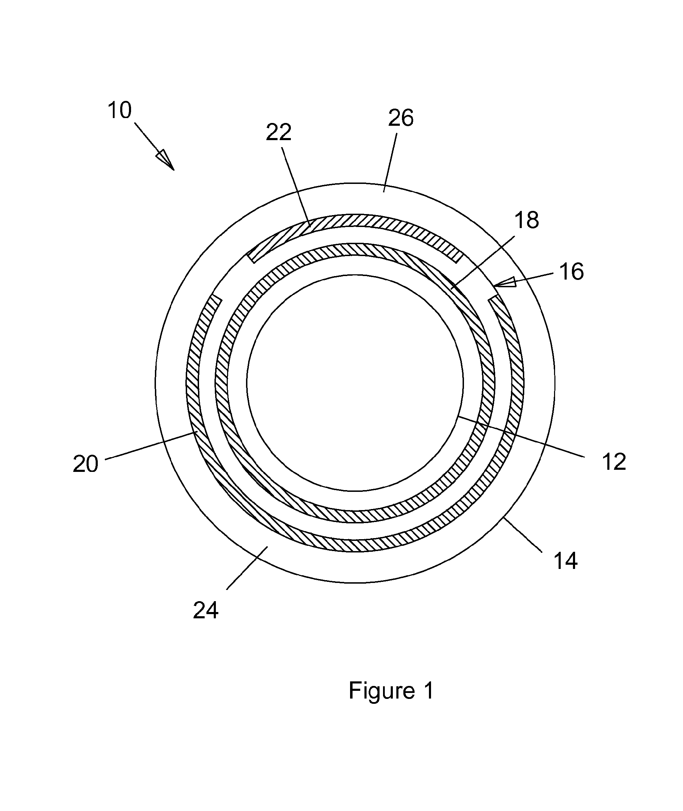

Figure 1 illustrates a schematic front elevation of a hydroelectric turbine incorporating a bearing load reduction system according to an embodiment of the present invention;
Figure 2 illustrates a sectioned elevation of the hydroelectric turbine as illustrated in Figure 1;
Figure 3 illustrates a perspective view of a portion of the rim of the rotor illustrated in Figures 1 and 2, showing a pair of parallel sets of rotor magnets; and
Figure 4 is a graph showing that the stabilising force generated by the load reduction system of the present invention is greater than the attracting force from generator magnets of the hydroelectric turbine.

### Detailed description of the drawings

Referring now to the accompanying drawings there is illustrated a hydroelectric turbine, generally indicated as 10, which incorporates a passive magnetic radial load reduction system as hereinafter described in order to reduce the radial loading applied to a bearing system (not shown) of the hydroelectric turbine 10. By reducing the radial loading on the bearing system (not shown) the start-up torque of the hydroelectric turbine 10 is reduced, as is general wear on the bearing system. Reduction of the start-up torque is particularly beneficial as it allows the hydroelectric turbine 10 to become operational at lower tidal velocities, thereby increasing the length of time that power is being generated by the hydroelectric turbine 10.

In the preferred embodiment illustrated the hydroelectric turbine 10 comprises a rotor 12 which is housed for rotation within and relative to a stator 14. The particular configuration of the rotor 12 and the stator 14 may be varied as required, although the rotor 12 is likely to comprise a shaftless design which means that the rotor 12 has an inherent capability to shift both radially and axially within the stator 14, in particular during the starting period when the rotor 12 transitions from a stationary to a rotating state. When the rotor 12 slows and then reaches a stationary state the rotor 12 will come to rest against some portion of the stator 14, at which location there will be contact between the rotor 12 and the stator 14, and in particular the bearing system (not shown) provided therebetween. Thus at start-up it is necessary for the torque generated by the tidal flow across the rotor 12 to overcome the static friction between the rotor 12 and the stator 14. However at the beginning of each tidal cycle the velocity of tidal flow is relatively low and thus the torque generated by the rotor 12 is correspondingly low, thereby preventing the static friction from being overcome until the tidal velocity increases, thus losing potential generation time. In addition, a number of tidal sites at which such turbines 10 are deployed will have what are known as "off axis effects" whereby the opposing directions of tidal flow are not in exact opposition to one another, which can mean that with the turbine 10 aligned to the tidal flow in one direction the tidal flow in the opposite direction will not be parallel to the axis of rotation of the turbine 10. This can result in the rotor 12 being pushed to one side of the stator 14 in the presence of these "off axis" effects, reducing the bearing clearance on that side of the turbine 10 and thereby raising the static friction of the radial bearing system (not shown). The unstable magnetic force of the generator then exacerbates the effect.

In order to address these issues the hydroelectric turbine 10 comprises a load reduction system 16 comprising at least one arrangement of magnets, preferably permanent magnets, in the form of an array of rotor magnets 18 mounted about the periphery of the rotor 12 and facing radially outwardly towards the stator 14, in addition to at least a first set of repulsing stator magnets 20 provided on the stator, and preferably a second set of attracting stator magnets 22, each facing radially inwardly towards the rotor magnets 18, and being axially aligned with the rotor magnets 18 as hereinafter described in detail.

In the embodiment illustrated the rotor magnets 18 are provided as a continuous or substantially continuous ring of magnets of a first polarity, and for the purposes of the following exemplary description the rotor magnets 18 will be considered as north pole magnets. The repulsing stator magnets 20, which are preferably provided about a first portion 24 of the stator 14 incorporating, in use, at least a lower portion of the stator 14, are of the same polarity as the rotor magnets 18, and thus in the embodiment illustrated are north pole magnets. The attracting stator magnets 22, which in the embodiment illustrate are of the opposite polarity to the rotor magnets 18 and therefore south pole magnets, are located about a second portion 26 of the stator 14 which incorporates, in use, at least an upper portion of the stator 14.

It will therefore be appreciated that the lower repulsing stator magnets 20 and the rotor magnets 18, having the same polarity, will generate a repulsing force on the underside of the rotor 12 which will act to lift the rotor 12 upwardly and thus out of contact with the stator 14. Conversely the upper attracting stator magnets and the rotor magnets have the opposite polarity and will therefore attract one another in the upper region of the stator 14, generating a force about the top side of the rotor 12 which will also act to lift the rotor 12 upwardly. These combined lifting forces will effectively allow the rotor 12 to float within the stator 14, thereby significantly relieving the loading on the mechanical bearing system (not shown), which may for example take the form of a combination of journals and bearing blocks provided on the rotor 12 and stator 14.

The stator magnets 20, 22 are each preferably provided in an arc about the stator 14. The repulsing stator magnets 20 extend upwardly from the lowermost point of the stator 14 and are preferably symmetrically disposed about a vertical axis of the stator 14. The radial length of the stator magnets 20 may be chosen as required to provide the necessary repulsing force, and may for example be provided as an arc of length greater than 180°. More preferably the stator magnets 20 are in an arc having a length of 240°, and most preferably with 120° either side of a central vertical axis of the stator 14. The attracting stator magnets 22 preferably extend symmetrically about the above-mentioned central vertical axis of the stator 14, and preferably have an arc length of less than 180°, and preferably approximately 60°.The repulsing stator magnets 20 are preferably separated from the attracting stator magnets 22 by a gap at either end of the arc of repulsing stator magnets 20. It is also preferred that the total axial length of the rotor magnets 18 is equal to the total axial length of the stator magnets 20,22 in order to ensure that the magnetic fields generated by these magnets are generally confined to the region close to the rings of rotor magnets 18 and stator magnets 20,22.

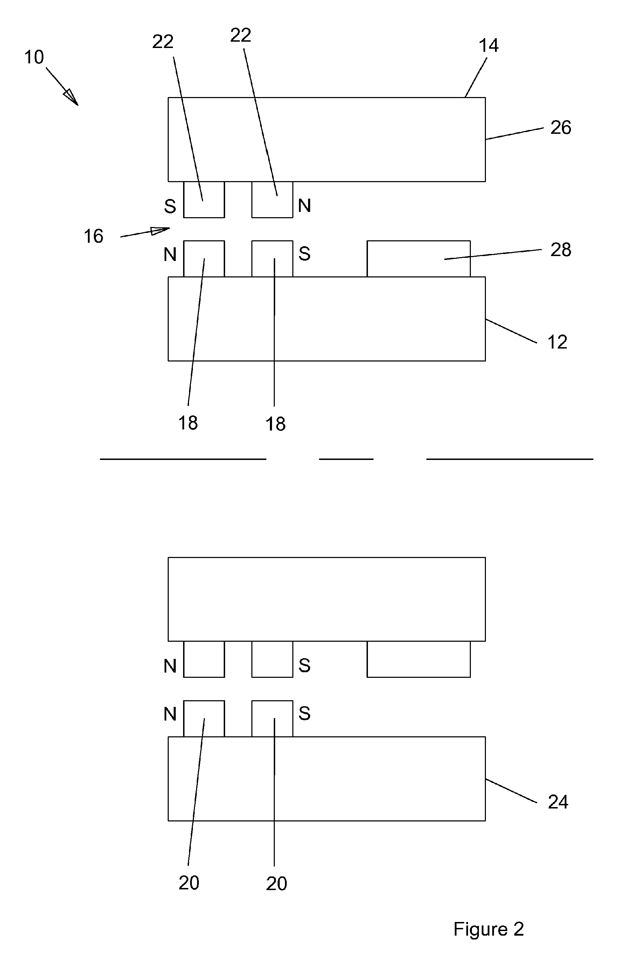

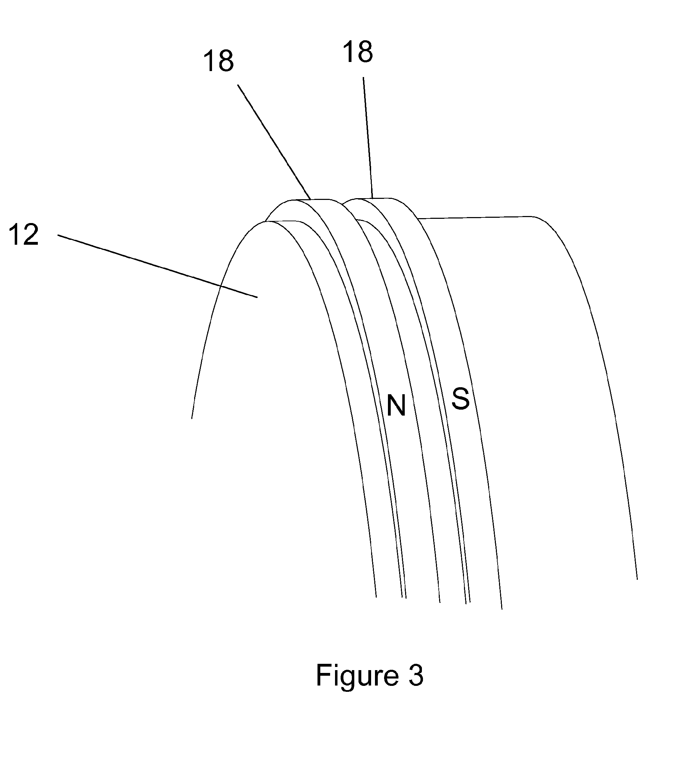

In a particularly preferred arrangement the load reduction system 16 comprises two or more arrays of rotor magnets 18 and stator magnets 20, 22, the arrays being axially spaced and radially parallel to one another, as for example can be seen in Figures 2 and 3. It is preferred that an axial gap is disposed between the adjacent arrays. It is also preferred that immediately adjacent arrays of magnets 18, 20, 22 are of reverse polarity to one another. By this is meant that if for example a first array has north pole rotor magnets18, then the axially adjacent array will have south pole rotor magnets 18, with a corresponding polarity for the repulsing stator magnets 20 and the attracting stator magnets 22. This arrangement provides an axially stabilising set of magnetic fields which will act to maintain alignment of the radially opposed rotor magnets 18 and stator magnets 20,22 in each array.

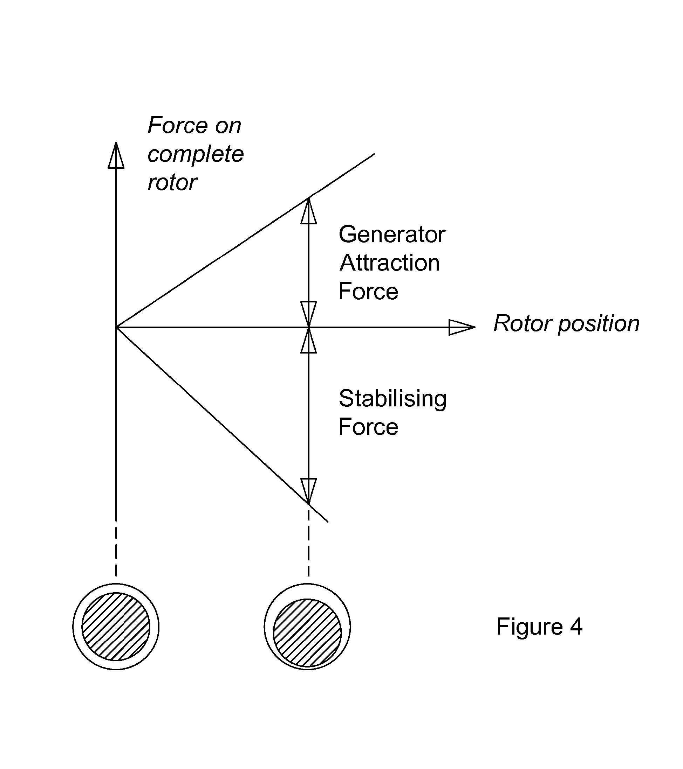

The load reduction system 16 will also act to counteract the attractive force between generator magnets 28 which in the embodiment illustrated are provided about the rotor 12 and which combine with corresponding coils (not shown) provided on the stator in order to generate electricity in response to rotation of the rotor 12 relative to the stator 14. The generator magnets 28 are attracted to a band of ferromagnetic material known as the stator iron (not shown), which provides a magnetic flux return path for the generator magnets 28. The total force on the rotor 12 due to this effect is zero if the rotor 12 is perfectly concentric within the stator 14. If however the rotor 12 is positioned eccentrically, the generator magnets 28 that are closer to the stator 14 exert a greater attractive force and thus this attraction tends to increase the eccentricity of the rotor 12. As illustrated in Figure 4 the attractive force increases with increasing eccentricity which makes the rotor 12 position unstable in both the vertical and horizontal directions.

However, the load reduction system 16 provides a restoring force in the horizontal direction and if the magnets 18, 20, 22 are suitably proportioned, the restoring force exceeds the attraction force produced by the generator magnets 28 so that the rotor 12 position is stable in the horizon direction as indicated by Figure 4.

The load reduction system 16 however acts against this attraction between the generator magnets 28 and the stator iron. The load reduction system 16 provides an upward force to the rotor 12 that varies with both the vertical and horizontal position of the rotor 12. The repulsive force reduces as the rotor 12 is raised relative to the stator 14 and this variation in force is in an opposite sense to the variation of the vertical force produced by the generator magnets 28. By suitable choice of magnet dimensions and the width of the stator arcs, the combined vertical force of the generator and the load reduction system 16 can be arranged to be very insensitive to both the vertical and horizontal position of the rotor 12. Therefore, although the vertical position is unstable, the residual magnetic force at the bearings is very small.

The rotor 12 may be provided with buoyancy in order to offset some or all of the weight of the rotor 12 once submerged, further reducing the vertical load on the bearing system (not shown) although this will not reduce any "off axis" effects or the magnetic attraction between the generator magnets 28 and the stator iron (not shown), which are therefore addressed exclusively by the load reduction system 16.

The load reduction system 16 provides the possibility of an adjustable arrangement whereby selected portions or regions of the stator magnets 20, 22 may be moved radially inwardly or outwardly. Load cells (not shown) or any functional equivalent fitted to the bearing system (not shown) of the turbine 10 could then provide data regarding the residual forces experienced by each region of the bearing system so that the stator magnets 20, 22 may be adjusted to their ideal positions in order to minimise friction within the bearing system (not shown). Such radial adjustments could be performed automatically in service, for example if the selected magnets or regions of stator magnets 20, 22 were equipped with suitable actuators (not shown).

It will therefore be appreciated that the hydroelectric turbine 10 of the present invention, and in particular the load reduction system 16, allows the static friction at start-up of the turbine to be reduced, thereby allowing the rotor 12 to begin rotating relative to the stator 14 at lower tidal velocities, increasing the active generation time of the turbine 10.

## Claims

1. A hydroelectric turbine comprising a rotor mounted for rotation relative to a stator; a generator adapted to generate electricity in response to rotation of the rotor relative to the stator; and a passive magnetic radial load reduction system comprising an arrangement of permanent magnets adapted to generate a repulsive force between the rotor and the stator about a first portion of the stator.

2. A hydroelectric turbine according to claim 1 in which the passive magnetic radial load reduction system comprises a plurality of axially spaced and radially parallel arrays of magnets.

3. A hydroelectric turbine according to claim 2 in which the polarity of adjacent arrays of magnets is reversed.

4. A hydroelectric turbine according to any preceding claim in which the arrangement of permanent magnets is adapted to generate an attractive force between the rotor and stator about a second portion of the stator.

5. A hydroelectric turbine according to claim 4 in which the first portion and the second portion of the stator are diametrically opposed.

6. A hydroelectric turbine according to claim 4 or 5 in which the arrangement of permanent magnets comprises a circumferentially extending array of magnets of a first pole on the rotor, an arc of magnets of a first pole on the first portion of the stator, and an arc of magnets of a second pole on the second portion of the stator, each radially opposed the rotor magnets.

7. A hydroelectric turbine according to claim 6 in which the rotor magnets are provided as a substantially continuous ring of magnets.

8. A hydroelectric turbine according to any of claim 4 to 7 in which the arc of magnets on the first portion of the stator are separated from the arc of magnets on the second portion of the stator, at each end of the arc, by a gap.

9. A hydroelectric turbine according to any of claims 4 to 8 in which the first portion of the stator corresponds with at least the bottom of the circular path described by the rotor, and the second portion corresponds with at least the top of the circular path, when the turbine is in an operational orientation.

10. A hydroelectric turbine according to any of claims 4 to 9 in which the first portion of the stator describes an arc of between 60° and 300°.

11. A hydroelectric turbine according to any of claims 4 to 10 in which the second portion of the stator describes an arc of between 180° and 60°.

12. A hydroelectric turbine according to any preceding claim in which the stator magnets are arranged to be symmetrically distributed about a vertical axis when the turbine is in an operational orientation.

13. A hydroelectric turbine according to any preceding claim in which the rotor is provided with buoyancy to offset the weight of the rotor.

14. A hydroelectric turbine according to any preceding claim in which the generator comprises an array of generator magnets independent of the load reduction system magnets.

15. A hydroelectric turbine according to claim 14 in which the generator magnets are axially spaced and radially parallel of the load reduction system magnets.

16. A hydroelectric turbine according to any preceding claim in which the radial position of at least a portion of the permanent magnets is adjustable.

17. A hydroelectric turbine according to any claim 16 in which the radial position of at least a portion of the permanent magnets on the stator is adjustable.

18. A hydroelectric turbine according to any claim 16 or 17 in which the radial position of the permanent magnets is automatically adjustable.
